# EUROPÄISCHE PATENTSCHRIFT

(11) **EP 0 584 116 B1**
(45) Veröffentlichungstag und Bekanntmachung des Hinweises auf die Patenterteilung: **10.07.1996**
(21) Anmeldenummer: 92909343.3
(22) Anmeldetag: 05.05.1992
(51) Int. Cl.: A47J 43/08, H02K 9/04

(54) **HAUSHALTSGERÄT MIT EINEM DURCH EIN LÜFTERRAD GEKÜHLTEN ELEKTRISCHEN ANTRIEBSMOTOR**
HOUSEHOLD APPLIANCE HAVING A FAN-COOLED ELECTRIC DRIVING MOTOR
APPAREIL MENAGER AYANT UN MOTEUR ELECTRIQUE D'ENTRAINEMENT REFROIDI PAR UN VENTILATEUR

(30) Priorität: 11.05.1991 DE 4115473
(43) Veröffentlichungstag der Anmeldung: 02.03.1994
(73) Patentinhaber: Braun Aktiengesellschaft, Frankfurt am Main (DE)
(72) Erfinder: BAUER, Alfred, D-63263 Neu-Isenburg (DE)
(86) Internationale Anmeldenummer: EP9200975
(87) Internationale Veröffentlichungsnummer: WO9220268

(56) Entgegenhaltungen:
- DE-A- 1 613 060
- DE-A- 3 408 693
- DE-A- 3 430 023
- DE-A- 3 535 939
- DE-C- 170 187
- DE-C- 376 932
- FR-A- 695 606
- NL-A- 7 001 701
- PATENT ABSTRACTS OF JAPAN vol. 7, no. 255 (E-210)(1400) 12. November 1983 & JP-A-58 139 655 (TOKYO SHIBAURA DENKI K.K.) 18. August 1983
- SOVIET PATENTS ABSTRACTS Section EI, Week 9115, 29. Mai 1991 Derwent Publications Ltd., London, GB; Class X, AN 91-107887/15 & SU-A-1 584 040 (LYUDIN DIESEL LOCO) 7. August 1990

## Beschreibung

Die Erfindung betrifft einen elektrischen Antriebsomotor für ein Haushaltsgerät nach dem Oberbegriff des Patentanspruchs 1.

Es ist bekannt, auf der ein elektrisches Haushaltsgerät antreibenden Achse eines Antriebsmotors auch noch ein Lüfterrad vorzusehen, welches die Wicklungen des Antriebsmotors kühlt (vgl. z. B. Braun-Produktprogramm Herbst 1990, Seite 36, Kompakt-Küchenmaschine UK 400). In diesem Fall entspricht die Drehzahl des Lüfterrades der Drehzahl des Antriebsmotors. Aus der DE 34 08 693 A1 ist weiterhin eine Universalküchenmaschine bekannt, in deren Arbeitsbehälter Nahrungsmittel durch verschiedene Werkzeuge bearbeitet werden können, wobei die einzelnen Werkzeuge auf einen Schaft aufsetzbar sind, der innerhalb einer in das Innere des Arbeitsbehälters hineinragenden Hülse umläuft. Der Schaft wird dabei über einen zwei Antriebsräder und einen Zahnriemen aufweisenden Riemenantrieb von der Welle des Antriebsmotors der Universalküchenmaschine angetrieben. Um auf ein separates Lüfterrad verzichten zu können, ist eines der beiden Antriebsräder des Riemenantriebs gleichzeitig auch als Lüfterrad ausgebildet. Zwar kann bei diesem bekannten Haushaltsgerät zur Platz- und Kosteneinsparung auf ein eigenständiges Lüfterrad verzichtet werden, was aber nichts an der Tatsache ändert, daß die Drehzahl des Lüfterrads entweder direkt der Drehzahl des Antriebsmotors entspricht oder für den Fall, daß das mit dem Schaft verbundene Antriebsrad als Lüfterrad ausgebildet ist, immer in einem festen Verhältnis zu dessen Drehzahl steht.

Diese Art, einen Antriebsmotor zu kühlen, ist zumindest für alle Kollektor-Elektromotoren von Nachteil, da bei diesem Motorentyp bei steigendem Lastmoment grundsätzlich auch dessen Ankerstrom ansteigt. Mit einem ansteigenden Ankerstrom ist aber auch eine höhere Wärmeerzeugung in der Ankerwicklung des Elektromotors verbunden. So ist beispielsweise bei einem Permanentmagnet-Gleichstrommotor die entstehende und in Wärme umgesetzte Verlustleistung proportional zum Quadrat des Ankerstroms, während sich die Drehzahl proportional zu dem Ankerstrom verringert. Somit bewirkt bei einem derartigen Motor beispielsweise eine Verdoppelung des Lastmomentes und damit auch eine Verdoppelung des Ankerstroms eine Vervierfachung der Verlustleistung unter gleichzeitiger Verringerung der Drehzahl. Damit verringert sich der kühlende Luftstrom gerade dann, wenn größere Verlustleistungen eine größere Kühlung des Antriebsmotors erfordern. Umgekehrt liefert das Lüfterrad bei kleinen Verlustleistungen, also dann, wenn keine starke Kühlung erforderlich ist, durch eine entsprechend hohe Drehzahl bedingte große Luftmengen.

Diese Nachteile führen dazu, daß bei hohen Lastmomenten und kleinen Drehzahlen nur sehr kurze Betriebszeiten des Antriebsmotors möglich sind, weil dessen Kühlung durch das Lüfterrad nicht ausreicht, während andererseits bei Drehzahlen im Leerlaufbereich große Lauf- und Lüfterradgeräusche entstehen.

Um die beschriebenen Nachteile teilweise zu beseitigen, könnte ein zusätzlicher Lüftermotor vorgesehen werden, der das Lüfterrad separat antreibt und somit eine Fremdlüftung des Antriebsmotors bewirkt. Die Kühlleistung des von einem separaten Lüftermotor angetriebenen Lüfterrads ist dann unabhängig von dem am Antriebsmotor angreifenden Lastmoment und damit bei ansteigendem Lastmoment zumindest konstant. Nachteilhaft bleibt aber, daß die Kühlleistung nicht an die vom Antriebsmotor abgegebene Wärme angepaßt ist.Nachteilig bei dieser Art von Fremdlüftung ist es weiterhin, daß für den Lüftermotor eine zusätzliche Stromversorgung erforderlich ist, was die Kosten für das Haushaltsgerät erhöht.

Aus der DE 34 30 023 A1 ist ein Elektrohandwerkszeug bekannt, dessen Antriebsmotor durch ein Lüfterrad gekühlt wird, dessen Drehzahl durch eine separate Steuereinrichtung einstellbar ist. Die Steuereinrichtung weist zu diesem Zweck einen Temperaturfühler auf, der bei Überschreiten eines vorgebbaren Temperatursollwerts den Lüftermotor einschaltet und dessen Kühlleistung durch Erhöhung der Drehzahl steigert, falls der Temperaturfühler trotz eingeschaltetem Lüftermotor noch ein Ansteigen der Temperatur des Antriebsmotors dedektiert. Ein wesentlicher Nachteil dieses Elektrohandwerkszeugs besteht darin, daß diese Art der Regelung der Kühlleistung der tatsächlichen Wärmeentwicklung im Antriebsmotor zeitlich hinterherhinkt, da es immer eine gewisse Zeit dauert, bis die in den Wicklungen des Antriebsmotors erzeugte Wärme vom Temperaturfühler auch wahrgenommen wird. Bei sehr schneller Wärmeentwicklung kann es daher bereits zu Schäden am Antriebsmotor gekommen sein, bevor der Lüftermotor eingeschaltet oder dessen Kühlleistung entsprechend erhöht wird. Ein weiterer Nachteil der aus der DE 34 30 023 A1 bekannten Anordnung besteht darin, daß die Temperatur des Ankers selbst nur sehr aufwendig mit dem genannten Temperaturfühler gemessen werden kann, da die Übertragung der einer bestimmten Temperatur entsprechenden elektrischen Meßgröße vom rotierenden Anker auf die Steuereinrichtung mit erheblichen konstruktiven Problemen verbunden ist. Schließlich ist es von Nachteil, daß die Steuereinrichtung nach Anbringen des Temperaturfühlers jeweils abgeglichen werden muß, um die erforderliche Kühlleistung jeweils exakt auf die eintretende Wärmeentwicklung abzustimmen. Ein derartiger Abgleich verteuert die Serienproduktion eines derartigen Elektrohandwerkszeugs.

Es ist weiterhin sowohl bei Hauptschluß- als auch bei Nebenschlußmotoren bekannt, die Steuerung eines Lüftermotors derart auszuführen, daß der Lüftermotor der Feldwicklung des Antriebsmotors parallel geschaltet wird und diese Parallelschaltung mit dem Anker des Antriebsmotors in Reihe geschaltet ist (DE-C-170187, DE-C-376932). Die Steuerung des Lüftermotors erfolgt dabei über den Spannungsabfall an der Feldwicklung des Antriebsmotors. In der DE-C-376932 ist dabei die Ausführungsform des Nebenschlußmotors beschrieben, bei der die Steuerung des Lüftermotors zusätzlich eine Komponente enthält, die auf den Ankerstrom des Antriebsmotors abstellt. Dies ist derart realisiert, daß in dem Ankerstromkreis des Antriebsmotors die Primärwicklung eines Transformators enthalten ist, dessen Sekundärwicklung in dem Stromkreis des Lüftermotors eingebracht ist. Durch diesen Transformator geht also in die Steuerung des Lüftermotors zusätzlich zu der Abhängigkeit von dem Spannungsabfall an der Feldwicklung eine weitere Komponente ein, die eine Änderung des Ankerstromes berücksichtigt.

Es ist deshalb Aufgabe der Erfindung, ein Haushaltsgerät zu schaffen, bei dem durch einfache und preiswerte Maßnahmen dafür gesorgt wird, daß die Kühlwirkung des Lüfterrades bei zunehmendem Lastmoment des Antriebsmotors ebenfalls zunimmt.

Diese Aufgabe wird für ein Haushaltsgerät nach dem Oberbegriff des Patentanspruchs 1 durch die im kennzeichnenden Teil dieses Patentanspruchs enthaltenen Merkmale gelöst.

Als Lüftermotor wird vorteilhaft ein separater Gleichstrom-Kollektormotor verwendet, der zum anderen so mit dem Antriebsmotor verschaltet ist, daß bei ansteigendem Lastmoment am Antriebsmotor - ausgelöst durch den mit einer Erhöhung ihres Lastmoments bei allen Kollektormotoren ebenfalls ansteigenden Ankerstrom - auch der Ankerstrom des Lüftermotors ansteigt. Da es sich bei dem Lüftermotor um einen Gleichstrom-Kollektormotor handelt, erhöht sich dessen Drehzahl so weit, bis das durch die Drehzahlerhöhung sich ebenfalls erhöhende Lastmoment seinem erhöhten Ankerstrom entspricht. Die Erhöhung der Drehzahl bei zunehmendem Ankerstrom hängt dabei zum einen von der Dimensionierung des Lüfterrades und den Strömungsverhältnissen im Kühlluftstrom des Antriebsmotors und zum anderen von der speziellen Kennlinie des verwendeten Gleichstrom-Kollektormotors ab.

Auf diese Weise wird eine wesentlich besser an die verschiedenen Betriebszustände des Antriebsmotors angepaßte Kühlwirkung erreicht. Bei steigendem Ankerstrom wird nämlich zur Abfuhr der damit ebenfalls steigenden Wärmeabgabe des Antriebsmotors die Drehzahl des Lüftermotors und damit auch dessen Kühlleistung erhöht, während umgekehrt bei wieder fallendem Ankerstrom auch die Drehzahl des Lüftermotors wieder abfällt. Auch die Leerlaufgeräusche des Lüftermotors können durch die Erfindung vermindert werden, da der Luftdurchsatz bei der Leerlaufdrehzahl des Antriebsmotors deutlich unter dem Wert liegen kann, der notwendig ist, wenn das Lüfterrad vom Antriebsmotor angetrieben wird. Es ist nämlich für den Leerlauf des Antriebsmotors keine Überdimensionierung der Kühlwirkung mehr nötig, wie dies der Fall sein muß, wenn das Lüfterrad mit dem Antriebsmotor gekoppelt ist und eine ausreichende Kühlwirkung bei steigendem Lastmoment nur noch dadurch erreicht wird, daß das Kühlsystem von seiner ursprünglichen Überdimensionierung "zehrt". Auf diese Weise wird erreicht, daß einer ansteigenden Verlustleistung im Antriebsmotor eine ebenfalls ansteigende Kühlleistung des Lüftermotors gegenübersteht und umgekehrt.

Neben dem Vorteil des großen Volumenluftstroms, erzeugt durch hohe Drehzahlen des Lüftermotors bei gleichzeitig hohen Verlustleistungen am Antriebsmotor, ergibt sich bei hohen Drehzahlen des Antriebsmotors und den damit verbundenen geringen Ankerströmen durch die kleineren Lüfterdrehzahlen ein niedrigerer Geräuschpegel. Es ergibt sich also der Vorteil, daß die Betriebszeiten des Antriebsmotors infolge der verbesserten Kühlung während einer hohen Drehmomentenabgabe wesentlich verlängerbar sind. Damit kann für den Fall, daß beispielsweise Teig mit einem Knetwerkzeug bearbeitet wird, das erforderliche Untersetzungsgetriebe mit einer geringeren Untersetzung versehen werden, als dies sonst üblich ist. Behält man dagegen das bisher verwendete Untersetzungsgetriebe bei, so besteht die Möglichkeit, bei gleichen Leistungsanforderungen einen kleiner dimensionierten Antriebsmotor zu verwenden.

Dies alles wird durch die Ausgestaltung des Gegenstandes nach Anspruch 1 erzielt, die darin besteht, daß der Antriebsmotor und der Lüftermotor elektrisch in Reihe geschaltet werden, so daß beide Motoren von demselben Ankerstrom durchflossen werden. Zusätzlich weist der Lüftermotor dabei eine wesentliche kleinere Nennspannung als der Antriebsmotor auf. Infolgedessen wirkt der Antriebsmotor in guter Näherung als eine Konstantstromquelle, wodurch dem Lüftermotor der Ankerstrom des zu kühlenden Antriebsmotors aufgeprägt wird. Damit arbeiten beide Motoren zwar mechanisch getrennt voneinander, sind aber elektrisch durch den gemeinsamen Ankerstrom miteinander gekoppelt. Ein großer Ankerstrom am Antriebsmotor bewirkt zwangsläufig auch ein ansteigendes Drehmoment an dem Lüftermotor, weshalb bei hohen Verlustleistungen in vorteilhafter Weise der kühlende Luftstrom erhöht und nicht - wie beim Antrieb des Lüfterrades durch einen Antriebsmotor - verringert wird. Je nach der Größe des Strömungswiderstandes der zu durchströmenden Strecke und dem Wirkungsgrad des Lüfterrades ergibt sich in erster Näherung eine zu dem Ankerstrom des Lüftermotors proportionale Drehzahl und ein dazu ebenfalls proportionaler Volumenluftstrom. Dadurch, daß beide Motoren von demselben Ankerstrom durchflossen werden, ist darüber hinaus für den Fall, daß zusätzlich noch ein Drehzahlsteller für den Antriebsmotor vorgesehen ist, nur eine gemeinsame Ansteuerschaltung erforderlich.

Wählt man gemäß Anspruch 2 als Lüftermotor einen Permanent-magnet-Gleichspannungsmotor so ergibt sich der Vorteil, daß man diesen unmittelbar elektrisch in Reihe mit dem Antriebsmotor schalten kann, unabhängig davon, ob es sich bei letzterem um einen Gleichstrom-Reihenschlußmotor oder um einen Permanentmagnet-Gleichstrommotor handelt.

Für den Fall, daß die Drehzahl des Antriebsmotors über einen Halbleiterschalter veränderbar ist, übernimmt eine parallel geschaltete Freilaufdiode in den Schaltpausen des Halbleiterschalters den Ankerstrom des Antriebsmotors (Anspruch 3).

Die Ausführungsform nach Anspruch 5 weist den Vorteil auf, daß auch dann, wenn für den Antriebsmotor ein Gleichstrom-Reihenschlußmotor verwendet wird, eine optimale Anpassung der Kühlleistung an die Belastung des Antriebsmotors erzielt wird. Während nämlich bei bekannten Haushaltsgeräten, deren Antriebsmotor als Gleichstrom-Reihenschlußmotor ausgebildet ist, der gleichzeitig auch noch das Lüfterrad antreibt, der Nachteil auftritt, daß bei weitgehend entlastetem Antriebsmotor dieser eine vergleichsweise hohe Drehzahl aufweist und damit auch eine hohe Kühlleistung erzeugt, verhält sich ein nach Anspruch 5 geschalteter Lüftermotor gerade umgekehrt. Die Drehzahl des Lüftermotors verhält sich nämlich in etwa proportional zum Ankerstrom des Antriebsmotors und damit zu dessen Kühlungsbedarf. Die Ausführung nach Anspruch 6 erlaubt daher auch die Verwendung von Gleichstrom-Reihenschlußmotoren, wenn dies aus nicht mit deren Kühlung zusammenhängenden Gründen erwünscht sein sollte.

Ist an der Achse des Lüftermotors eine zusätzliche Schwungmasse vorgesehen (Anspruch 6), so ergeben sich dadurch mehrere Vorteile. So werden Drehzahlschwankungen des Lüftermotors reduziert, die von kurzzeitigen Belastungsschwankungen des Antriebsmotors herrühren. Ebenso bewirkt der Einschaltstromstoß keine Drehzahlspitze am Lüftermotor und nach dem Abschalten des Haushaltsgerätes kann das Lüfterrad aufgrund der nicht vorhandenen mechanischen Kopplung zwischen Antriebsmotor und Lüftermotor und aufgrund der in der Schwungmasse gespeicherten Energie nachlaufen, so daß die Kühlung des Antriebsmotors im abgeschalteten Zustand noch für eine gewisse Zeitspanne aufrecht erhalten wird.

Nachfolgend wird die Erfindung anhand der Zeichnung näher beschrieben. Es zeigen:
- Fig. 1: ein Blockdiagramm der Erfindung und
- Fig. 2: ein erstes Ausführungsbeispiel der erfindungsgemäßen Schaltung,
- Fig. 3: ein zweites Ausführungsbeispiel der erfindungsgemäßen Schaltung,
- Fig. 4a bis 4d: den Stromverlauf in verschiedenen Zweigen der Schaltung nach Fig. 3 und
- Fig. 5: ein drittes Ausführungsbeispiel der erfindungsgemäßen Schaltung.

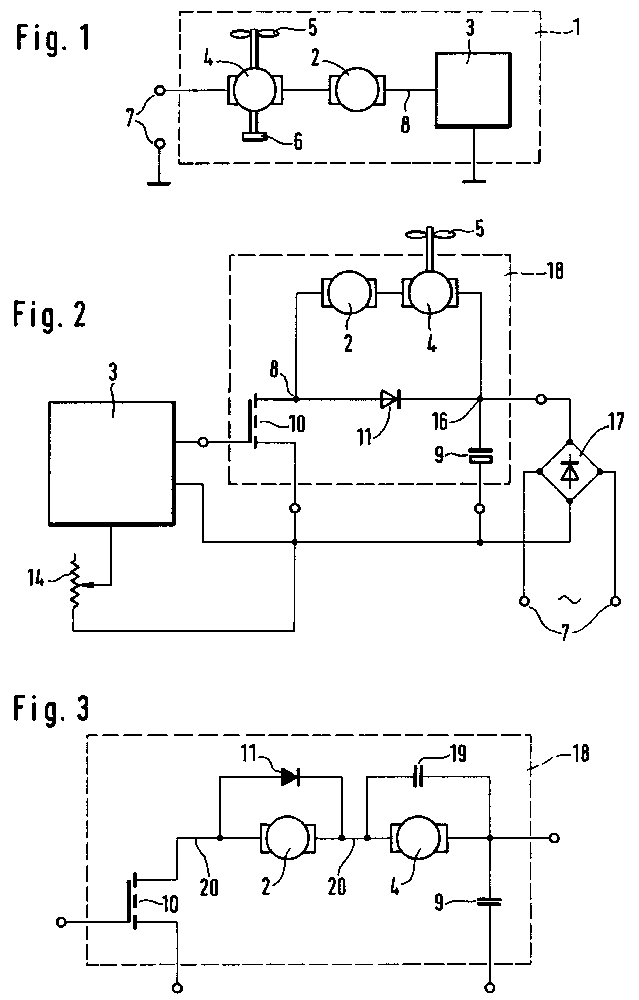

Fig. 1 zeigt ein Haushaltsgerät 1, das einen einen Kollektor aufweisenden Antriebsmotor 2 und eine Steuerschaltung 3 aufweist. Der Antriebsmotor 2 kann beispielsweise für den Antrieb eines Arbeitswerkzeuges, beispielsweise das Knetwerkzeug einer Küchenmaschine dienen. In den durch die beiden Anschlüsse 7, den Antriebsmotor 2 und die Steuerschaltung 3 gebildeten Stromkreis ist elektrisch in Reihe ein ebenfalls einen Kollektor aufweisenden Gleichstrom-Lüftermotor 4 geschaltet.

Der Lüftermotor 4 weist ein Lüfterrad 5 auf, das einen kühlenden Luftstrom für den Antriebsmotor 2 erzeugt. Eine Kühlung des Antriebsmotors 2 ist deshalb erforderlich, weil aufgrund der Verlustleistung, die proportional dem Quadrat des Ankerstroms ist, Wärme in den Wicklungen entsteht. Gegenüber dem Antriebsmotor 2 weist der Lüftermotor 4 eine wesentlich kleinere Nennspannung auf, so daß der in der Reihenschaltung aus den beiden Motoren 2, 4 fließende Strom durch den Antriebsmotor 2 bestimmt und dem Lüftermotor 4 als Ankerstrom aufgeprägt wird. Der damit für beide Motoren 2, 4 gemeinsame Ankerstrom kann durch die Steuerschaltung 3 geregelt werden. In der Praxis kann man beispielsweise bei einer Netzspannung von 220 Volt für den Lüftermotor 4 einen Permanentmagnet-Gleichstrommotor mit einer Nennspannung von 6 Volt wählen.

Greift an der Antriebswelle des Antriebsmotors 2 ein hohes Lastmoment an, steigt dessen Ankerstrom und verursacht in erhöhtem Maße Wärme in dessen Wicklungen. Mit der Zunahme des Ankerstroms erhöht sich gleichzeitig auch der Stromfluß durch den Lüftermotor 4, weshalb dessen Drehzahl zunimmt und sich dadurch der Luftdurchsatz vergrößert. Der vergrößerte Luftdurchsatz bewirkt eine verbesserte Kühlung des Antriebsmotors 2.

Nimmt umgekehrt das Lastmoment an dem Antriebsmotor 2 ab, erhöht sich dessen Drehzahl, während dessen Ankerstrom gleichzeitig sinkt. Bei höheren Drehzahlen des Antriebsmotors 2 verringert sich die Verlustleistung aufgrund dessen abgesenkten Ankerstroms, wodurch auch die Drehzahl des Lüftermotors 4 abfällt. Folglich nimmt die Kühlwirkung zu, wenn sich die Verlustleistung des Antriebsmotors 2 erhöht, und umgekehrt ab, wenn sich diese erniedrigt.

Zusätzlich weist der Lüftermotor 4 eine Schwungmasse 6 auf, die Drehzahlschwankungen ausgleicht und die nach dem Einschaltstromstoß eine Drehzahlspitze vermeidet. Wird der Ankerstrom über die Steuerschaltung 3 abgeschaltet, bewirkt die Schwungmasse aufgrund ihres Trägheitsmomentes ein Nachlaufen des Lüftermotors 4, weshalb die Kühlung des Antriebsmotors 2 für eine bestimmte Zeitdauer noch aufrecht erhalten bleibt.

Fig. 2 zeigt ein Ausführungsbeispiel einer Schaltung zum Ansteuern der in Reihe geschalteten Motoren 2, 4, die beide als Permanentmagnet-Gleichstrommotoren ausgebildet sind. An den Anschlüssen 7 wird eine Wechselspannung zugeführt, die mittels eines Brückengleichrichters 17 gleichgerichtet wird, der beispielsweise eine Spannung von 300 Volt erzeugt. Ein Kondensator 9 dient zum Sieben der Gleichspannung. Ausgehend von dem Schaltungspunkt 16 erfolgt der Stromfluß des Ankerstroms durch den Lüftermotor 4 zu dem Antriebsmotor 2 bis zu dem Schaltungspunkt 8. Der Ankerstrom fließt über den Schaltungspunkt 8 durch einen Feldeffekt-Transistor 10 und gelangt zurück zu dem Gleichrichter 17. Bei dem Feldeffekt-Transistor kann es sich um einen sogenannten "Insulated Gate Bipolar Transistor" (IGBT) handeln.

Der Feldeffekt-Transistor 10 wird nach Fig. 2 durch die Steuerschaltung 3 angesteuert, die mittels eines Potentiometers 14 auf eine bestimmtes Tastverhältnis für den Feldeffekt-Transistor 10 einstellbar ist. Somit kann mittels des Potentiometers 14 die mittlere Ankerspannung und damit die Drehzahl des Antriebsmotors 2 eingestellt werden.

Bei einer bestimmten mittleren Ankerspannung hängt die Drehzahl des Lüftermotors 4 wiederum von dem sich ergebenden Ankerstrom ab, der seinerseits von dem am Antriebsmotor 2 auftretenden Lastmoment bestimmt wird. Zwischen den Schaltungspunkten 16 und 8 ist eine Freilaufdiode 11 ausgebildet, die zum einen in den Schaltpausen des Feldeffekt-Transistors 10 den Ankerstrom übernimmt und zum anderen den Feldeffekt-Transistor 10 vor Überspannungen schützt, wenn dieser zeitweise den Ankerstrom unterbricht.

Das zweite in Fig. 3 dargestellte Ausführungsbeispiel der Erfindung unterscheidet sich von dem in der Fig. 2 dargestellten lediglich in Bezug auf die Schaltungsanordnung innerhalb des gestrichelt umrahmten Kastens 18 (vgl. Fig. 2), so daß zur Vermeidung von Wiederholungen in Fig. 3 nur der Kasten 18 und die darin befindlichen Schaltungselemente gezeigt sind.

Gemäß Fig. 3 liegt wiederum eine Reihenschaltung des Antriebsmotors 2 und des Lüftermotors 4 vor. Im Unterschied zur Schaltung gemäß Fig. 2 ist aber die Freilaufdiode 11 nur zum Antriebsmotor parallelgeschaltet, während zum Lüftermotor 4 ein Speicherkondensator 19 parallelgeschaltet ist. Darüber hinaus unterscheidet sich die Schaltung gemäß Fig. 3 auch noch dadurch, daß für den Antriebsmotor 2 ein Permanentmagnet-Gleichstrommotor höherer Windungszahl und damit auch höherer Nennspannung verwendet wird, als dies bei der Schaltung nach Fig. 2 der Fall ist. So kann für den Lüftermotor beispielsweise eine Nennspannung von etwa 10 Volt gewählt werden.

Bedingt durch den getakteten Drehzahlsteller, bestehend aus dem Feldeffekt-Transistor 10 und der Freilaufdiode 11 fließt in der Leitung 20 ein pulsierender Strom. Damit am Lüftermotor 4 keine Überspannung entsteht und ein geglätteter Strom fließt, schaltet man den Speicherkondensator 19 parallel zum Lüftermotor 4. Im Lüftermotor 4 fließt dann ein Gleichstrom, der dem arithmetischen Mittelwert des durch den Feldeffekt-Transistor 10 fließenden Stromes entspricht. Da das Produkt aus dem durch den Feldeffekt-Transistor 10 fließenden Strom und der gleichgerichteten Netzspannung praktisch der vom Antriebsmotor 2 aufgenommenen Leistung entspricht, verhält sich die Drehzahl des Lüfterrades 5 (vgl. Fig. 1) des Lüftermotors 4 wie die vom Antriebsmotor aufgenommene Leistung.

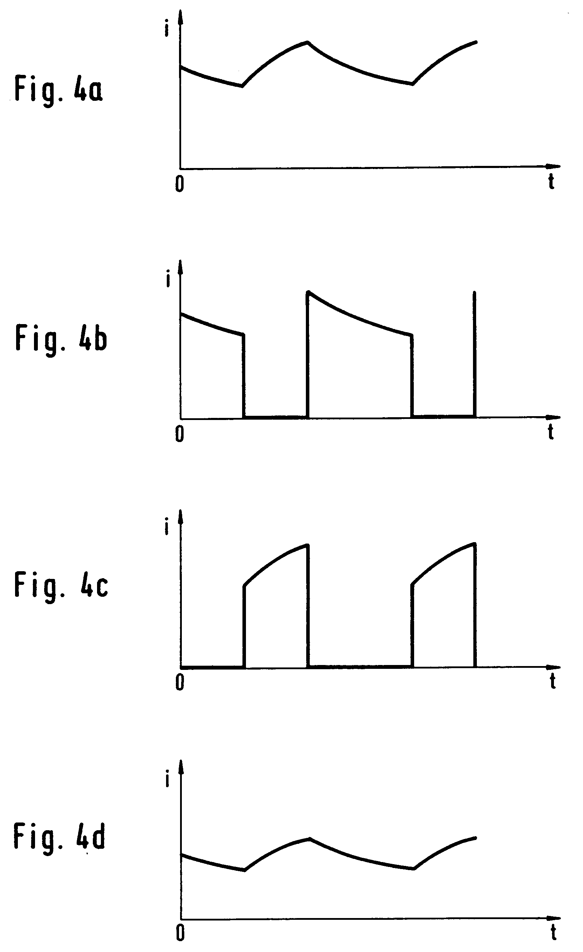

In den Figuren 4a bis 4d ist in schematischer Weise der zeitliche Verlauf (Achse: t) der Ströme (Achse: i) in den verschiedenen Zweigen der Schaltung nach Fig. 3 dargestellt. Fig. 4a zeigt dabei den Strom, der durch den Antriebsmotor 2 fließt. Dieser Strom setzt sich zusammen aus dem Strom, der durch die Freilaufdiode 11 fließt und in Fig. 4b dargestellt ist, und dem Strom, der durch den Feldeffekt-Transistor 10 fließt, welcher in Fig. 4c dargestellt ist. In Fig. 4d ist der Strom dargestellt, der durch den Lüftermotor 4 fließt, wenn dieser in Reihe zu der Betriebsspannungsquelle - repräsentiert durch den Kondensator 9 - geschaltet ist und ihm der Speicherkondensator 19 parallel geschaltet ist.

Wie man aus den Figuren 4a bis 4c entnehmen kann, fließt bei der Schaltung nach Fig. 3 im Lüftermotor 4 ein geringerer Strom als im Antriebsmotor 2. Deshalb wird ein Lüftermotor mit einer höheren Windungszahl und damit höheren Nennspannung, beispielsweise 10 Volt, gewählt, als dies bei der Schaltung nach der Fig. 2 der Fall ist.

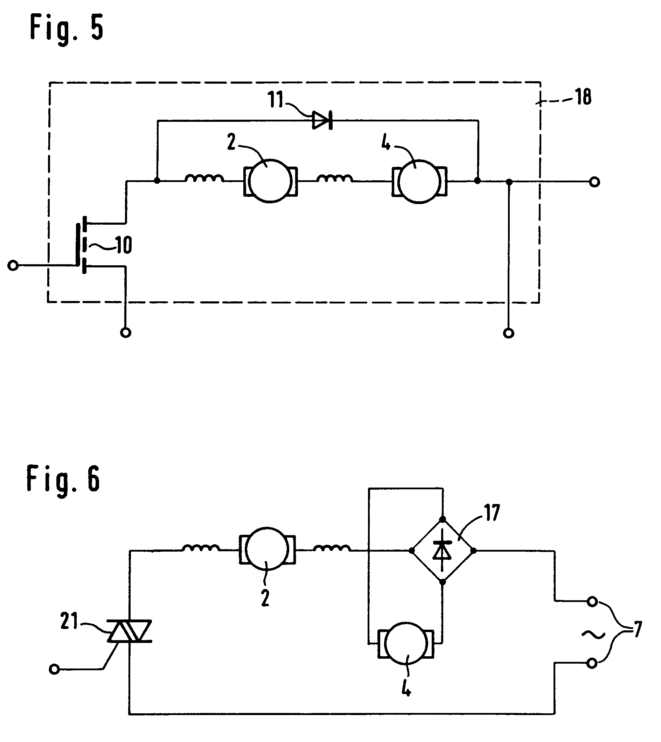

Die in Fig. 5 dargestellte dritte Ausführungsform der Erfindung entspricht von der prinzipiellen Anordnung von Antriebsmotor 2 und Lüftermotor 4 her der in der Fig. 2 dargestellten Schaltung. Es ist nämlich wiederum parallel zur Reihenschaltung aus Antriebsmotor 2 und Lüftermotor 4 eine Freilaufdiode 11 geschaltet. Beim Antriebsmotor 2 handelt es sich aber um einen Gleichstrom-Reihenschlußmotor, während für den Lüftermotor 2 nach wie vor ein Permanentmagnet-Gleichstrommotor verwendet wird. Weiterhin kann auf den in der Schaltung gemäß Fig. 2 noch enthaltenen Kondensator 9 zur Siebung der Netzfrequenz verzichtet werden. Damit fließt sowohl durch den Antriebsmotor 2 als auch den Lüftermotor 4 ein Gleichstrom, der mit der Netzfrequenz pulsiert. Die Drehzahlregelung des Antriebsmotors 2 erfolgt wiederum über einen Feldeffekt-Transistor 10 mittels einer sogenannten Pulsbreitensteuerung. Da bei einem Gleichstrom-Reihenschlußmotor in einem weiten Bereich das Drehmoment proportional zum Quadrat des Ankerstroms ist, verhält sich die Drehzahl des Lüfterrades 5 (vgl. Fig. 1) des Lüftermotors 4 bei einer Schaltung gemäß Fig. 5 in etwa proportional zum Ankerstrom des Antriebsmotors 2.

Die in Fig. 6 dargestellte vierte Ausführungsform der Erfindung zeigt einen Antriebsmotor 2, der zum einen wiederum als Reihenschlußmotor und zum anderen als Universalmotor ausgebildet ist und demzufolge - wie in Fig. 6 dargestellt - auch mit Wechselstrom betrieben werden kann. Die Drehzahlsteuerung des Antriebsmotors 2 erfolgt in diesem Fall über einen Triac 21 mittels einer sogenannten Phasenanschnittsteuerung. Der Antriebsmotor 2 ist dabei einerseits mit dem Wechselspannungsanschluß des Brückengleichrichters 17 und andererseits mit dem freien der beiden Anschlüsse 7 der Wechselspannungsquelle verbunden. Der Lüftermotor 4 ist direkt mit den Gleichspannungsanschlüssen des Brückengleichrichters 17 verbunden. Auch bei dieser Schaltung steigt mit zunehmendem Ankerstrom am Antriebsmotor 2 zwangsläufig auch der dem Lüftermotor 4 aufgeprägte Ankerstrom an. Während einerseits der steigende Ankerstrom im Antriebsmotor 2 dessen Wärmeentwicklung und daher auch dessen Kühlungsbedarf ansteigen läßt, sorgt andererseits der ebenfalls zunehmende Ankerstrom im Lüftermotor 4 dafür, daß dessen Drehzahl ansteigt, womit das von ihm angetriebene Lüfterrad 5 (vgl. Fig. 2) eine entsprechend höhere Kühlleistung erzeugt.

## Patentansprüche

1. Haushaltsgerät mit einem durch ein Lüfterrad gekühlten und einem einen Kollektor aufweisenden elektrischen Antriebsmotor, wobei das Lüfterrad (5) von einem weiteren elektrisch betriebenen, ebenfalls einen Kollektor aufweisenden Lüftermotor (4) angetrieben wird,
**dadurch gekennzeichnet**,
daß der Antriebsmotor (2) und der Lüftermotor (4) elektrisch miteinander in Reihe geschaltet sind und daß die Anker von Antriebsmotor und Lüftermotor von demselben Ankerstrom aus der äußeren Stromquelle (7) durchflossen werden.

2. Haushaltsgerät nach Anspruch 1,
**dadurch gekennzeichnet**,
daß der Lüftermotor (4) ein Permanentmagnet-Gleichspannungsmotor ist.

3. Haushaltsgerät nach Anspruch 2,
**dadurch gekennzeichnet**,
daß auch der Antriebsmotor (2) als Permanentmagnet-Gleichstrommotor ausgebildet ist, daß die Drehzahlen der Motoren (2, 4) über einen Halbleiterschalter (10) veränderbar sind und daß parallel zu der Reihenschaltung aus Antriebsmotor (2) und Lüftermotor (4) eine Freilaufdiode (11) geschaltet ist.

4. Haushaltsgerät nach Anspruch 2,
**dadurch gekennzeichnet**,
daß auch der Antriebsmotor (2) als Permanentmagnet-Gleichstrommotor ausgebildet ist, daß die Drehzahlen der Motoren (2,4) über einen Halbleiterschalter (10) veränderbar sind, daß parallel zum Antriebsmotor (2) eine Freilaufdiode (11) und daß parallel zum Lüftermotor (4) ein Speicherkondensator (19) geschaltet ist.

5. Haushaltsgerät nach Anspruch 2,
**dadurch gekennzeichnet**,
daß der Antriebsmotor (4) als Reihenschluß-Gleichstrommotor ausgebildet ist, daß die Drehzahlen der Motoren (2, 4) über einen Halbleiterschalter (10) veränderbar sind und daß parallel zu der Reihenschaltung aus Antriebsmotor (2) und Lüftermotor (4) eine Freilaufdiode (11) geschaltet ist.

6. Haushaltsgerät nach Anspruch 1,
**dadurch gekennzeichnet**,
daß an der Motorwelle des Lüftermotors (4) eine zusätzliche Schwungmasse (6) ausgebildet ist.

## Claims

1. A domestic appliance having an electric drive motor that is cooled by a fan wheel and includes a collector, with the fan wheel (5) being driven by a further electrically powered fan motor (4) equally including a collector,
**characterized in that** the drive motor (2) and the fan motor (4) are electrically connected in series, and that the same armature current from the external power source (7) flows through the armatures of both the drive motor and the fan motor.

2. The domestic appliance as claimed in claim 1,
**characterized in that** the fan motor (4) is a permanent-magnet direct-current motor.

3. The domestic appliance as claimed in claim 2,
**characterized in that** also the drive motor (2) is configured as a permanent-magnet direct-current motor, that the speeds of the motors (2, 4) are variable by means of a semiconductor switch (10), and that a free-wheeling diode (11) is connected in parallel with the series arrangement comprised of drive motor (2) and fan motor (4).

4. The domestic appliance as claimed in claim 2,
**characterized in that** also the drive motor (2) is configured as a permanent-magnet direct-current motor, that the speeds of the motors (2, 4) are variable by means of a semiconductor switch (10), that a free-wheeling diode (11) is connected in parallel with the drive motor (2), and that a storage capacitor (19) is connected in parallel with the fan motor (4).

5. The domestic appliance as claimed in claim 2,
**characterized in that** the drive motor (2) is configured as a series-wound direct-current motor, that the speeds of the motors (2, 4) are variable by means of a semiconductor switch (10), and that a free-wheeling diode (11) is connected in parallel with the series arrangement comprised of drive motor (2) and fan motor (4).

6. The domestic appliance as claimed in claim 1,
**characterized in that** an additional balance weight (6) is provided on the motor shaft of the fan motor (4).

## Revendications

1. Appareil ménager comportant un moteur électrique d'entraînement refroidi par une roue de ventilateur et présentant un collecteur, la roue de ventilateur (5) étant entraînée par un moteur de ventilateur (4) sous la forme d'un moteur électrique supplémentaire présentant également un collecteur, **caractérisé en ce**
que le moteur d'entraînement (2) et le moteur de ventilateur (4) sont connectés électriquement en série et que les induits du moteur d'entraînement et du moteur de ventilateur sont traversés d'un même courant d'induit à partir de la source de courant extérieure (7).

2. Appareil ménager selon la revendication 1, **caractérisé en ce**
que le moteur de ventilateur (4) est un moteur à courant continu à aimants permanents.

3. Appareil ménager selon la revendication 2, **caractérisé en ce**
que le moteur d'entraînement (2) est également un moteur à courant continu à aimants permanents, que les vitesses de rotation des moteurs (2, 4) peuvent être changées au moyen d'un commutateur à semi-conducteur (10) et qu'une diode de roue libre (11) est branchée en parallèle avec le montage en série du moteur d'entraînement (2) et du moteur de ventilateur (4).

4. Appareil ménager selon la revendication 2, **caractérisé en ce**
que le moteur d'entraînement (2) est également un moteur à courant continu à aimants permanents, que les vitesses de rotation des moteurs (2, 4) peuvent être changées au moyen d'un commutateur à semi-conducteur (10), qu'une diode de roue libre (11) est branchée en parallèle avec le moteur d'entraînement (2) et qu'un condensateur accumulateur (19) est branché en parallèle avec le moteur de ventilateur (4).

5. Appareil ménager selon la revendication 2, **caractérisé en ce**
que le moteur d'entraînement est un moteur à courant continu de type série, que les vitesses de rotation des moteurs (2, 4) peuvent être changées au moyen d'un commutateur à semi-conducteur (10) et qu'une diode de roue libre (11) est branchée en parallèle avec le montage en série du moteur d'entraînement (2) et du moteur de ventilateur (4).

6. Appareil ménager selon la revendication 1, **caractérisé en ce**
qu'une masse d'inertie (6) supplémentaire est formée sur l'arbre du moteur de ventilateur (4).
